# EUROPÄISCHE PATENTANMELDUNG

(11) **EP 0 802 112 A1**
(43) Veröffentlichungstag der Anmeldung: **22.10.1997**
(21) Anmeldenummer: 97103519.1
(22) Anmeldetag: 04.03.1997
(51) Int. Cl.: B64F 1/30

(54) **Fahrbare Überdachung**

(30) Priorität: 17.04.1996 AT 697/96
(71) Anmelder: Kahlbacher, Anton, 3363 Amstetten-Neufurth (AT)
(72) Erfinder: Kahlbacher, Anton, 3363 Amstetten-Neufurth (AT)
(74) Vertreter: Torggler, Paul Norbert

(57) **Zusammenfassung**

Fahrbare Überdachung (3) für eine in den Einstieg eines Flugzeuges (1) integrierte Treppe (2).

## Beschreibung

Die vorliegende Erfindung betrifft eine fahrbare Überdachung für eine in den Einstieg eines Flugzeuges integrierte Treppe.

Bei großen Flugzeugen, beispielsweise Jumbos, bei denen die Einstiegstüre des Flugzeuges mehrere Meter Abstand zum Boden hat, ist es notwendig, eine Hilfseinrichtung für den Ein- bzw. Ausstieg der Passagiere vorzusehen. Aus der EP 0 372 386 oder auch der EP 0 429 032 sind Fluggasttreppen bekannt, die sich für diesen Zweck bewährt haben. Besonders komfortabel sind dabei solche Fluggasttreppen, bei denen über den Stufen eine geschlossene Kabine ausgebildet ist, sodaß die Passagiere auch bei schlechter Witterung trockenen Fußes vom Flugfeldzubringerbus (Shuttle) in das Flugzeug gelangen können.

Bei kleinen Regionalflugzeugen weist hingegen die Einstiegstüre des Flugzeuges einen deutlich geringeren Abstand zum Boden auf, sodaß die Höhendifferenz mit einer in den Einstieg integrierten Treppe überwunden werden kann. In diesem Fall sind jedoch die ein- und aussteigenden Passagiere schutzlos allen Witterungseinflüssen ausgesetzt. Das Problem wird dadurch verschärft, daß die schmale Einstiegsluke der Regionalflugzeuge nur ein langsames Ein- und Aussteigen der Passagiere einzeln und nacheinander erlaubt, wodurch häufig längere Wartezeiten auftreten.

Es ist daher die der vorliegenden Erfindung zugrundeliegende Idee, auch für Regionalflugzeuge mit in den Einstieg integrierter Treppe eine Einrichtung vorzusehen, welche den Passagieren einen trockenen Übergang vom Flugfeldzubringerbus in das Flugzeug ermöglicht.

Eine Ausführungsvariante der erfindungsgemäßen fahrbaren Überdachung sieht dabei vor, daß die Überdachung aus einem Grundelement besteht, das beweglich mit einem Anschlußelement verbunden ist. Dabei ist es günstig, wenn das Anschlußelement durch Gelenke schwenkbar mit dem Grundelement verbunden ist und für die Schwenkbewegung eine Schwenkvorrichtung in Form eines Hydraulik- oder Elektrozylinders oder eines Spindel-Mutter-Triebs vorgesehen ist.

Um die fahrbare Überdachung variabel an verschiedene Flugzeugtypen anpassen zu können, ist es vorteilhaft, wenn das Anschlußelement einen an sich bekannten Faltenbalg zum Andocken an den jeweiligen Flugzeugrumpf aufweist.

Eine spezielle Ausgestaltung der erfindungsgemäßen Einrichtung sieht vor, daß die Überdachung zur Erhellung des Innenraumes Fenster aufweist und daß zum Schutz gegen Wind und Wetter Schürzen vorgesehen sind, die die Überdachung seitlich zum Boden hin abdichten.

Die fahrbare Überdachung läßt sich über längere Strecken am besten mittels eines Zugfahrzeuges transportieren. Für diesen Transport ist an der Überdachung eine Deichsel vorgesehen, die während des Ein- und Ausstieges der Passagiere in der Überdachung hochgeklappt werden kann, sodaß sie keine Behinderung für den Durchgang der Passagiere darstellt.

Da aufgrund der geltenden Sicherheitsvorschriften Hilfseinrichtungen nicht über eine Deichsel an ein Flugzeug angedockt werden dürfen, kann weiters vorgesehen sein, daß die Überdachung mindestens ein angetriebenes Rad aufweist. Der Antrieb dieses Rades erfolgt vorteilhafterweise über einen Elektromotor.

Weitere Merkmale und Einzelheiten der vorliegenden Erfindung ergeben sich aus der nachfolgenden Figurenbeschreibung.

Dabei zeigt:

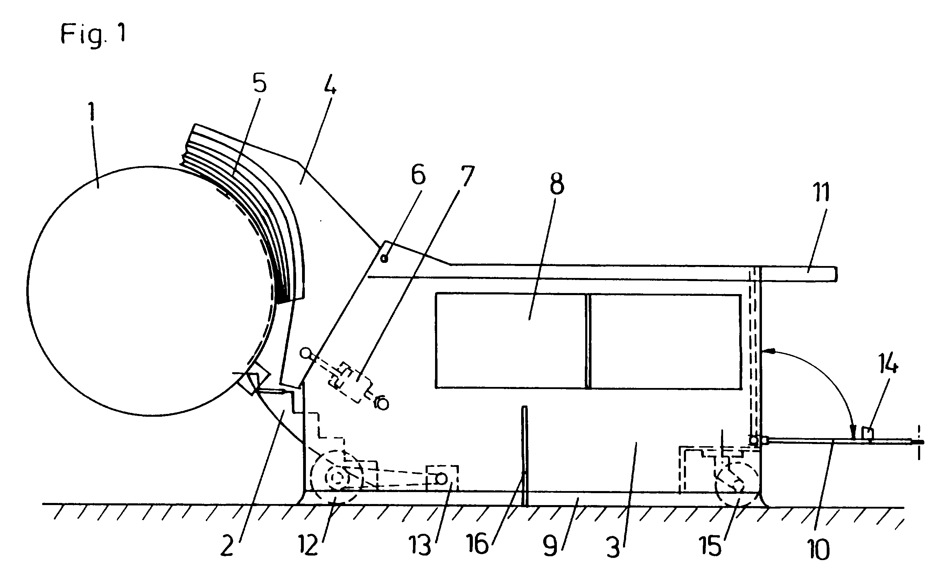

Fig. 1 eine Seitenansicht einer erfindungsgemäßen Überdachung und
Fig. 2 die dazugehörige Vorderansicht.

Bei dem in den Figuren gezeigten Ausführungsbeispiel ist die erfindungsgemäße fahrbare Überdachung im wesentlichen zweiteilig ausgeführt. Das Grundelement 3 ist dabei über die Gelenke 6 mit dem Anschlußelement 4 verbunden. Weiters ist das Grundelement 3 verfahrbar ausgebildet und weist eine Mindestlänge auf, die ausreicht, die Strecke zwischen Flugzeug und dem im geforderten Sicherheitsabstand geparkten Shuttlebus zu überspannen.

Die Gelenke 6 ermöglichen eine Schwenkbewegung des Anschlußelementes 4, das mit dem Faltenbalg 5 am Rumpf 1 eines Flugzeuges anliegt. Über die Verschwenkeinrichtung 7, die entweder aus einem hydraulischen oder elektrischen Zylinder oder aus einem Spindel-Mutter-Trieb besteht, kann die Lage des Anschlußelementes 4 zum Grundelement verändert werden, wodurch sich die Überdachung optimal an unterschiedliche Flugzeugtypen anpassen läßt.

Die Figuren zeigen ein Flugzeug mit aufgeklappter Einstiegstüre, wobei in die Einstiegstüre eine Treppe 2 integriert ist. Über diese Treppe 2 erfolgt der Ein- und Ausstieg der Passagiere, welche unter der Überdachung bis zu dem an der Spitze 11 der Überdachung geparkten Shuttlebus (in den Zeichnungen nicht gezeigt) gelangen. Durch den Einbau von Fenstern 8 in das Grundelement 3 reicht die Helligkeit im Inneren der Überdachung für den Durchgang der Passagiere aus, sodaß auf eine weitere Beleuchtung zumindest bei Tag versichtet werden kann.

Da die fahrbare Überdachung insbesondere für Schlechtwetter vorgesehen ist, sind zur weitgehend winddichten seitlichen Abdichtung Schürzen 9 vorgesehen.

Für den Transport der Überdachung über längere Wegstrecken ist eine Deichsel 10 vorgesehen, mit der die Überdachung an ein Zugfahrzeug angekoppelt werden kann. Die Überdachung rollt dabei auf den Rädern 12 bzw. 15, wobei letztere als um 360° drehbare Schwenkräder ausgebildet sind.

Da die allgemeinen Sicherheitsvorschriften ein direktes Andocken von Hilfsfahrzeugen über eine Deichsel an ein Flugzeug verbieten, ist für den Antrieb der Räder 12 ein Elektromotor 13 vorgesehen, um die erfindungsgemäße Überdachung vorschriftsmäßig an ein Flugzeug heranführen zu können. Die Schaltvorrichtung 14 für den Elektromotor 13 kann beispielsweise an der Deichsel 10 befestigt sein, von wo die in die Einstiegstüre des Flugzeuges integrierte Treppe 2 gut eingesehen werden kann.

Nach Beendigung des Andockvorganges wird die Deichsel 10 hochgeklappt und bildet aufgrund ihrer Form einen Rahmen in der Überdachung aus. Die lichte Durchgangshöhe bzw. -breite wird von der Deichsel 10 dabei nur in äußerst geringem Ausmaß reduziert.

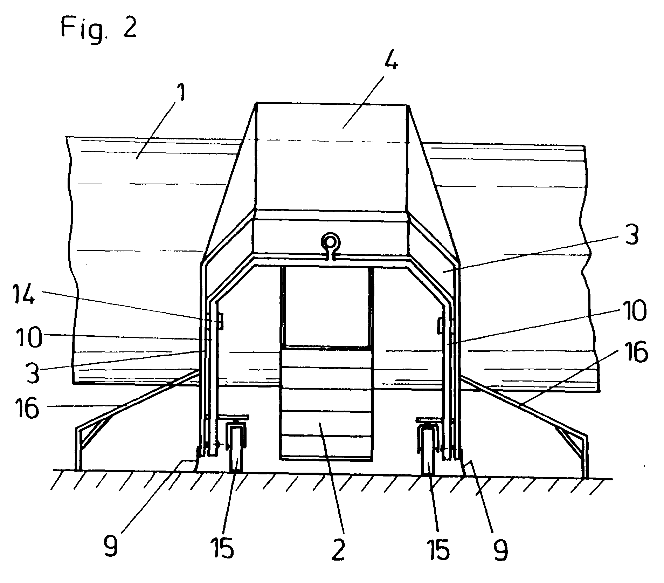

Um bei starkem Wind die Überdachung abzusichern und ihre Stabilität zu erhöhen, sind ausklappbare Stützen 16 vorgesehen, welche in Fig. 2 in ihrer abstehenden Position gezeigt sind. Durch diese Stutzen 16 wird die Standfestigkeit der Überdachung stark verbessert, um ihren Einsatz bei jedem Flugwetter sicherzustellen.

## Patentansprüche

1. Fahrbare Überdachung für eine in den Einstieg eines Flugzeuges integrierte Treppe.

2. Überdachung nach Anspruch 1, dadurch gekennzeichnet, daß die Überdachung aus einem Grundelement (3) besteht, das beweglich mit einem Anschlußelement (4) verbunden ist.

3. Überdachung nach Anspruch 2, dadurch gekennzeichnet, daß das Anschlußelement (4) durch Gelenke (6) schwenkbar mit dem Grundelement (3) verbunden ist.

4. Überdachung nach Anspruch 2 oder 3, dadurch gekennzeichnet, daß für die Schwenkbewegung zwischen Anschlußelement (4) und Grundelement (3) eine Verschwenkvorrichtung (7) in Form eines Hydraulik- oder Elektrozylinders oder eines Spindel-Mutter-Triebes vorgesehen ist.

5. Überdachung nach einem der Ansprüche 2 bis 4, dadurch gekennzeichnet, daß das Anschlußelement (4) einen an sich bekannten Faltenbalg (5) zum Andocken an einen Flugzeugrumpf (1) aufweist.

6. Überdachung nach einem der Ansprüche 1 bis 5, dadurch gekennzeichnet, daß die Überdachung Fenster (8) aufweist.

7. Überdachung nach einem der Ansprüche 1 bis 6, dadurch gekennzeichnet, daß die Überdachung Schürzen (9) aufweist, die die Überdachung seitlich zum Boden hin abdichten.

8. Überdachung nach einem der Ansprüche 1 bis 7, dadurch gekennzeichnet, daß zum Transport der Überdachung mittels eines Zugfahrzeuges eine Deichsel (10) vorgesehen ist.

9. Überdachung nach Anspruch 8, dadurch gekennzeichnet, daß die Deichsel (10) hochklappbar ist und im hochgeklappten Zustand einen Rahmen für die Überdachung bildet.

10. Überdachung nach einem der Ansprüche 1 bis 9, dadurch gekennzeichnet, daß die Überdachung mindestens ein angetriebenes Rad (12) aufweist.

11. Überdachung nach Anspruch 10, dadurch gekennzeichnet, daß für den Antrieb des Rades (12) ein Elektromotor (13) vorgesehen ist.

12. Überdachung nach einem der Ansprüche 1 bis 11, dadurch gekennzeichnet, daß an der Deichsel (10) eine Schaltvorrichtung (14) für einen Elektromotor (13) und/oder die Verschwenkvorrichtung (7) des Anschlußelementes (4) vorgesehen ist.

13. Überdachung nach einem der Ansprüche 1 bis 12, dadurch gekennzeichnet, daß die Überdachung neben dem angetriebenen Rad (12) mindestens zwei Schwenkräder (15) aufweist.

14. Überdachung nach einem der Ansprüche 1 bis 13, dadurch gekennzeichnet, daß die Überdachung seitlich am Grundelement (3) ausklappbare Stützen (16) aufweist.
